(19) Europäisches Patentamt
European Patent Office
Office européen des brevets

(11) **EP 1 646 692 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **04740357.1**

(22) Anmeldetag: **26.06.2004**

(51) Int Cl.:
***C09C 1/36*** *(2006.01)*     ***D21H 17/69*** *(2006.01)*

(86) Internationale Anmeldenummer:
**PCT/EP2004/006954**

(87) Internationale Veröffentlichungsnummer:
**WO 2005/017049 (24.02.2005 Gazette 2005/08)**

(54) **VERFAHREN ZUR OBERFLÄCHENBEHANDLUNG EINES TITANDIOXID-PIGMENTS**

METHOD FOR TREATING THE SURFACE OF A TITANIUM DIOXIDE PIGMENT

PROCEDE DE TRAITEMENT DE SURFACE D'UN PIGMENT CONSTITUE DE DIOXYDE DE TITANE

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.07.2003 DE 10332650**

(43) Veröffentlichungstag der Anmeldung:
**19.04.2006 Patentblatt 2006/16**

(73) Patentinhaber: **KRONOS INTERNATIONAL, INC.**
**51307 Leverkusen (DE)**

(72) Erfinder:
• **DREWS-NICOLAI, Lydia**
**51067 Köln (DE)**
• **BLUEMEL, Siegfried**
**40883 Ratingen (DE)**
• **JUERGENS, Volker**
**57399 Kirchhundem (DE)**
• **SCHMITT, Volker**
**42799 Leichlingen (DE)**

(56) Entgegenhaltungen:
**EP-A- 0 406 194     WO-A-2004/018568**
**GB-A- 724 751     US-A- 4 239 548**
**US-A- 5 665 466**

**Beschreibung**

Die Erfindung betrifft ein Verfahren zur Oberflächenbehandlung eines Titandioxid-Pigments, ein Titandioxid-Pigment mit hoher Opazität und hoher Retention und seine Verwendung bei der Herstellung von Dekorpapier.

Dekorpapier ist ein Bestandteil eines dekorativen, duroplastischen Beschichtungswerkstoffes, der vorzugsweise zur Veredelung von Möbeloberflächen und für Laminat-Fußböden eingesetzt wird. Als Laminate werden Schichtpress-Stoffe bezeichnet, in denen beispielsweise mehrere imprägnierte, aufeinander geschichtete Papiere bzw. Papiere und Hartfaser- oder Holzspanplatten miteinander verpresst sind. Durch die Verwendung von speziellen Kunstharzen wird eine außerordentlich hohe Kratz-, Stoß-, Chemikalien- und Hitzebeständigkeit der Laminate erreicht.

Die Verwendung von Spezialpapieren (Dekorpapieren) ermöglicht die Herstellung dekorativer Oberflächen, wobei das Dekorpapier nicht nur als Deckpapier für z.B. unattraktive Holzwerkstoffoberflächen, sondern auch als Träger für das Kunstharz dient. Zu den Anforderungen, die an ein Dekorpapier gestellt werden, gehören u.a. Opazität (Deckvermögen), Lichtechtheit (Vergrauungsstabilität), Farbechtheit, Nassfestigkeit, Imprägnierbarkeit und Bedruckbarkeit.

Um die erforderliche Opazität des Dekorpapiers zu erzielen, ist ein Pigment auf Basis von Titandioxid prinzipiell hervorragend geeignet. Bei der Papierherstellung wird in der Regel ein Titandioxid-Pigment bzw. eine Titandioxid-Pigment-Suspension mit einer Zellstoff-Suspension vermengt. Neben den Einsatzstoffen Pigment und Zellstoff kommen im allgemeinen auch Hilfsstoffe wie z. B. Nassfestmittel und gegebenenfalls weitere Zusatzstoffe wie z. B. bestimmte Füllstoffe zum Einsatz. Die Wechselwirkungen der einzelnen Komponenten (Zellstoff, Pigment, Hilfs- und Zusatzstoffe, Wasser) untereinander tragen zur Papierbildung bei und bestimmen die Retention des Pigments. Unter Retention versteht man das Rückhaltevermögen aller anorganischen Stoffe im Papier bei der Herstellung.
Eine niedrige Retention des Pigments beeinträchtigt die Opazität des Dekorpapiers, wirkt sich damit zu Lasten der Wirtschaftlichkeit des Verfahrens aus und führt zu Umwelt- und Recyclingproblemen bei der Papierproduktion.

Für die Anwendung im Dekorpapier existiert eine Reihe von Titandioxid-Pigmenten. Zu den wichtigsten Eigenschaften gehören neben einer guten Helligkeit und Lichtechtheit die Retention und die Opazität. Unter Lichtechtheit versteht man vor allem die Beständigkeit der Laminate gegen Vergrauung unter Einwirkung von Licht.
Es ist bekannt, dass eine Verbesserung der Retention und/oder der Opazität ebenso wie eine Verbesserung der Lichtechtheit durch spezielle Nachbehandlungen erreicht werden kann.

Insbesondere zur Verbesserung der Lichtechtheit sind zahlreiche patentierte Verfahren bekannt. Danach werden die Pigmente mit unterschiedlichen Stoffen oberflächenbehandelt, beispielsweise mit wasserhaltigem $Al_2O_3$ und einem farblosen Metallphosphat (US 3,926,660), mit Zink-/Aluminiumphosphat (US 5,114,486), mit Aluminiumphosphat (US 5,785,748) oder mit Cer- und mit Aluminiumphosphat (US 4,239,548). In diesen Patenten geht es um die Lichtechtheit von $TiO_2$-pigmentierten Melaminharz-Systemen, wobei insbesondere die Retentionseigenschaften der Pigmente keine Rolle spielen. Des weiteren zeichnen sich diese Verfahren dadurch aus, dass die Phosphat-Oberflächenbehandlung von einer $TiO_2$-Grundkörper-Suspension ausgeht, deren pH-Wert im sauren Bereich liegt. Während oder nach Hinzufügung der einzelnen Nachbehandlungskomponenten wird der pH-Wert vom sauren Bereich ausgehend in den Bereich von etwa 5 - 8 angehoben.

GB 724,751 offenbart ein Verfahren zur Oberflächenbehandlung eines Titandioxid-Pigments, mit Hilfe dessen Aufhellungsvermögen (tinting strength), Opazität und Benetzungsvermögen in organischen Beschichtungsmedien durch Aufbringen einer Magnesiumoxid-Aluminiumoxid-Schicht verbessert wird. Die Fällung der Oxide erfolgt aus dem sauren Milieu heraus durch Zugabe einer alkalischen Verbindung.

Gemäß EP 0 406 194 A1 wird ein Titandioxid-Pigment aufeinanderfolgend mit Titanphosphat, Zirkonoxid und Aluminiumoxid beschichte, um sowohl die optischen Eigenschaften als auch die Witterungsstabilität zu verbessern.

Die WO 2004/018568 A1 offenbart ein Verfahren zur Oberflächenbehandlung eines Titandioxid-Pigments zum Einsatz in Dekorpapier mit verbessertem Deckvermögen, verbesserter Vergrauungsstabilität und guter Retention. Bei dem Verfahren wird auf die Titandioxidpartikele eine Aluminium-Titan-Phosphatschicht und abschließend eine Magnesiumoxidschicht aufgebracht.

In der EP 0 713 904 B1 (entsprechend US 5,665,466 A) wird ein Weg zur Erhöhung der Retention durch eine Nachbehandlung beschrieben, bei der eine erste Schicht von Aluminiumoxidphosphat bei einem sauren pH-Wert von 4 bis 6 aufgebracht wird und eine zweite Schicht Aluminiumoxid in einem pH-Bereich von 3 bis 10, bevorzugt bei pH etwa 7 gefällt wird. Eine weitere Verbesserung in der Retention wird durch eine dritte Schicht aus Magnesiumoxid erzielt, so dass das hergestellte Pigment durch aufeinander folgende Schichten von Aluminiumoxidphosphat, Aluminiumoxid und Magnesiumoxid ausgezeichnet ist.

Eine weitere Möglichkeit zur Erhöhung der Retention wird in der US 5,705,033 offenbart. Durch Zugabe eines kationischen Polymers, z.B. "Nalco 8105", ein Copolymer aus Acrylamid und Diallyldimethylammoniumchlorid, wird eine verbesserte Fixierung des Pigments auf den Zellstoff-Fasern und eine erhöhte Retention erreicht.

Aufgabe der Erfindung ist es, ein Verfahren anzugeben, mit dem Pigmente mit gegenüber dem Stand der Technik verbesserter Retention bei mindestens gleichbleibend hoher Opazität und guter Lichtechtheit für den Einsatz in Dekorpapieren hergestellt werden können.

Die Aufgabe wird durch die Nachbehandlung des Titandioxid-Pigments dergestalt gelöst, dass bei der Nachbehandlung in einem ersten Schritt eine Aluminium-Komponente und eine Phosphor-Komponente in die Titandioxid-Suspension gegeben werden, wobei der pH-Wert auf mindestens 10,5 gehalten wird und in einem zweiten Schritt durch Zugabe einer sauren Komponente der pH-Wert auf unter 9 abgesenkt wird.

Weitere vorteilhafte Verfahrensvarianten sind in den Unteransprüchen beschrieben.

Gegenstand der Erfindung ist also ein Nachbehandlungsverfahren für Titandioxid-Pigmente, das zu Pigmenten mit verbesserter Retention bei gleichbleibend hoher Opazität führt, des weiteren ein Pigment mit diesen Eigenschaften und die Verwendung dieses Pigments bei der Dekorpapierherstellung.

Bei dem erfindungsgemäßen Verfahren wird auf der $TiO_2$-Partikeloberfläche eine Schicht aus Aluminium-Phosphor-Verbindungen gegebenenfalls im Gemenge mit Aluminiumoxidhydrat abgeschieden. Die Zusammensetzung ist abhängig von den eingesetzten Mengen der Aluminium- und der Phosphorkomponente. Im folgenden wird diese Schicht vereinfacht als Aluminiumoxidphosphat-Schicht bezeichnet.

Die Erfindung beruht darauf, dass die Aluminiumoxidphosphat-Schicht aus dem alkalischen Milieu heraus gefällt wird. Entscheidend für das Verfahren ist, dass die Aluminium- und die Phosphorkomponente zunächst in die alkalische $TiO_2$-Suspension, die einen pH von mindestens 10 aufweist, gegeben werden und dass der pH-Wert während der Zugabe nicht unter 10,5 absinkt. Es hat sich gezeigt, dass bei Einhaltung dieser Bedingungen eine verbesserte Retention der Pigmente zu erreichen ist gegenüber den bekannten Verfahren, bei denen Aluminiumoxidphosphat aus dem sauren Milieu heraus gefällt wird oder auch gegenüber Verfahrensweisen, bei denen während der Zugabe der Aluminium- und der Phosphorkomponente der pH-Wert der Suspension auf unter 9 absinkt.

Das der Erfindung zugrunde liegende Oberflächenbehandlungsverfahren geht von einer wässrigen und bevorzugt nassgemahlenen $TiO_2$-Grundkörper-Suspension aus. Die Nassmahlung wird gegebenenfalls in Gegenwart eines Dispergiermittels durchgeführt. Unter $TiO_2$-Grundkörper versteht man das noch nicht nachbehandelte $TiO_2$-Rohpigment. Bevorzugt wird nach dem Chloridprozess hergestellter $TiO_2$-Grundkörper eingesetzt. Das Verfahren wird bei einer Temperatur von unter 80 °C, bevorzugt bei 55 bis 65 °C durchgeführt. Die Suspension wird zunächst mit geeigneten alkalischen Verbindungen, z.B. NaOH, auf einen pH-Wert von mindestens 10 eingestellt. Dies geschieht, falls eine Nassmahlung stattfindet, idealer Weise vor der Mahlung.

In Schritt a) des erfindungsgemäßen Verfahrens wird nachfolgend in die Suspension eine Aluminium- und eine Phosphor-Komponente jeweils in Form einer wässrigen Lösung gegeben. Es ist für die Erfindung entscheidend, dass während der Zugabe der Komponenten der pH-Wert der Suspension auf mindestens 10,5 und bevorzugt auf mindestens 11 gehalten wird. Geeignete Aluminiumverbindungen sind alkalisch oder sauer reagierende wasserlösliche Salze, beispielsweise Natriumaluminat, Aluminiumsulfat, Aluminiumnitrat, Aluminiumchlorid, Aluminiumacetat etc. Diese Auswahl ist jedoch nicht als Einschränkung zu verstehen. Besonders geeignet ist Natriumaluminat. Handelt es sich um eine sauer wirkende Verbindung, die bei Zugabe den pH-Wert auf unter 10,5 drücken würde, ist dieser Effekt im Sinne der Erfindung durch Zugabe einer geeigneten alkalischen Verbindung wie NaOH zu kompensieren. Dem Fachmann sind die geeigneten alkalischen Verbindungen und die notwendigen Mengen, um den pH-Wert bei mindestens 10,5 zu halten, geläufig. Die Aluminiumverbindung soll in einer Menge von 2,0 bis 9,0 Gew.-%, bevorzugt 4,0 bis 6,0 Gew.-% gerechnet als $Al_2O_3$ und bezogen auf den $TiO_2$-Grundkörper zugegeben werden. Geeignete Phosphorverbindungen sind anorganische Verbindungen wie Alkaliphosphate, Ammoniumphosphat, Polyphosphate, Phosphorsäure etc. Diese Auswahl ist nicht als Einschränkung zu verstehen. Besonders geeignet sind Dinatrium-Hydrogenphosphat oder Phosphorsäure. Im Falle von Phosphorverbindungen, bei deren Zugabe der pH-Wert auf unter 10,5 gedrückt würde, ist dieser Effekt ebenfalls durch Zugabe einer geeigneten alkalischen Verbindung wie NaOH zu kompensieren. Dem Fachmann sind die geeigneten alkalischen Verbindungen und die notwendigen Mengen, um den pH-Wert bei mindestens 10,5 zu halten, geläufig. Die Phosphorkomponente wird in einer Konzentration von 1,0 bis 5,0 Gew.-%, bevorzugt 1,5 bis 3,5 Gew.-% und insbesondere von 2,0 bis 3,0 Gew.-% gerechnet als $P_2O_5$ bezogen auf den $TiO_2$-Grundkörper zugegeben.

Die Al- und die P- Komponente können der Suspension in beliebiger Reihenfolge einzeln nacheinander oder gleichzeitig zugeführt werden.

Anschließend erfolgt in Schritt b) die Zugabe einer sauren Verbindung, um den pH-Wert auf unter 9 zu senken, vorzugsweise in den Bereich 3,5 bis 8 und besonders bevorzugt auf 4,5 - 6,0.

Die eingesetzte saure Verbindung kann eine Säure sein wie Schwefelsäure, Salzsäure, Phosphorsäure oder eine andere geeignete Säure. Des weiteren kann es sich bei der sauren Verbindung auch um ein entsprechendes sauer reagierendes Salz wie beispielsweise Aluminiumsulfat handeln.

Es hat sich als vorteilhaft erwiesen, in einem dann folgenden Schritt c) eine Schicht als Aluminiumoxidhydrat mit Hilfe einer "fixed-pH"-Behandlung aufzubringen, dergestalt, dass durch die parallele Zugabe einer sauren und einer alkalischen Aluminiumverbindung (z.B. Natriumaluminat/Aluminiumsulfat) oder durch Zugabe einer alkalischen Aluminiumverbindung wie Natriumaluminat und einer Säure, beispielsweise Schwefelsäure oder durch die Zugabe einer sauren Aluminium-Verbindung wie z.B. Aluminiumsulfat zusammen mit einer Lauge wie z.B. NaOH, der pH-Wert weitestgehend konstant gehalten wird. Als günstig für die fixed-pH-Behandlung haben sich dabei pH-Werte zwischen 4 und 9 herausgestellt. Zur Einstellung dieses pH-Wertes eignen sich beispielsweise Laugen oder Säuren (z. B. NaOH / $H_2SO_4$)

oder alkalisch oder sauer reagierende Salzlösungen (z. B. Natriumaluminat / Aluminiumsulfat). Als besonders vorteilhaft hat sich herausgestellt, die fixed-pH-Behandlung bei dem pH-Wert durchzuführen, auf den in Schritt b) abgesenkt wurde.

Nach Bedarf erfolgt abschließend in einem Schritt d) eine pH-Einstellung auf etwa 6 bis 7, beispielsweise mit Laugen / Säuren (z.B. NaOH / $H_2SO_4$) oder mit alkalischen / sauren Salzlösungen wie Natriumaluminat / Aluminiumsulfat. Die Menge der in Schritt b), c) und d) eingesetzten Aluminiumverbindungen gerechnet als $Al_2O_3$ sind auf die bereits in Schritt a) verwendete Menge $Al_2O_3$ anzurechnen. Die Summe der in Schritt a) bis Schritt d) eingesetzten Aluminium-verbindungen gerechnet als $Al_2O_3$ bezogen auf $TiO_2$-Grundkörper beträgt idealer Weise 2,0 - 9,0 Gew.-% und bevorzugt 4,0 - 6,0 Gew.-%. Ebenso ist die Menge der gegebenenfalls in Schritt b) und Schritt c) eingesetzten Phosphorkomponente gerechnet als $P_2O_5$ auf die in Schritt a) verwendete Menge $P_2O_5$ anzurechnen. Die Summe der in Schritt a) bis Schritt c) eingesetzten Phosphorverbindungen gerechnet als $P_2O_5$ beträgt also idealer Weise 1,0 bis 5,0 Gew.-%, bevorzugt 1,5 bis 3,5 Gew.-% und insbesondere 2,0 bis 3,0 Gew.-% gerechnet als $P_2O_5$ bezogen auf den $TiO_2$ Grundkörper.

Zusammen mit der Al- und der P-Komponente können in Schritt a) auch weitere Metallsalzlösungen von z. B. Ce, Ti, Si, Zr oder Zn in die Suspension gegeben werden, die anschließend in Schritt b) gemeinsam als Phosphat oder Oxidhydrat auf die Partikeloberfläche gefällt werden.

Des weiteren ist es möglich, entweder vor oder nach Schritt c) eine weitere anorganische Schicht aufzubringen, wie sie aus dem Stand der Technik bekannt sind (z.B. Zr-, Ce-, Si-, Ti- oder Zn-haltige Verbindungen).

Das nachbehandelte $TiO_2$-Pigment wird durch dem Fachmann bekannte Methoden der Filtration von der Suspension abgetrennt und der entstandene Filterkuchen gewaschen, um die löslichen Salze zu entfernen. Der gewaschenen Filterpaste kann zur Verbesserung der Lichtechtheit des Pigments im Laminat vor oder während der anschließenden Trocknung eine nitrathaltige Verbindung, z.B. $KNO_3$, $NaNO_3$, $Al(NO_3)_3$ in einer Menge von 0,05-0,5 % gerechnet als $NO_3$, zugemengt werden. Bei der anschließenden Mahlung, beispielsweise mit einer Dampfmühle, kann dem Pigment eine organische Verbindung zugefügt werden aus der Reihe derer, wie sie bei der Herstellung von $TiO_2$-Pigmenten üblicherweise verwendet werden und die dem Fachmann bekannt sind wie z.B. Polyalkohol (Trimethylpropan). Alternativ zur Zugabe der nitrathaltigen Verbindungen vor oder während der Trocknung kann die Zugabe solcher Substanzen auch während der Mahlung erfolgen.

Das nach diesem Verfahren hergestellte Pigment zeigt gegenüber den Vergleichspigmenten verbesserte Retention und verbesserte Opazität und ist für den Einsatz im Dekorpapier bestens geeignet.

Das erfindungsgemäße Nachbehandlungsverfahren wird üblicherweise im Batchbetrieb durchgeführt. Es ist aber auch möglich, mit Hilfe eines Inline-Mischers, der optimale Homogenisierung sicherstellt, in einem quasi-kontinuierlichen Verfahren zu arbeiten. In jedem Fall muss sichergestellt sein, dass die Al- und P-Komponente vor der Fällung in einem pH-Bereich von mindestens 10,5 zugesetzt wird.

Im folgenden ist die Erfindung beispielhaft beschrieben:

Beispiel 1:

Eine sandgemahlene $TiO_2$-Suspension aus dem Chloridprozess mit einer $TiO_2$-Konzentration von 450 g/l wird bei 60 °C mit NaOH auf einen pH-Wert von 10 eingestellt. Unter Rühren werden der Suspension 2,0 Gew.-% $Al_2O_3$ als Natriumaluminat zugefügt. Dabei stellt sich ein pH-Wert von etwa 13 ein. Nach einer Rührzeit von 30 Minuten werden 2,5 Gew.-% $P_2O_5$ als Dinatrium-Hydrogenphosphat-Lösung zugefügt. Der pH-Wert der Suspension bleibt bei etwa 13. Es folgt eine weitere Rührzeit von 30 Minuten. Die Suspension wird im nächsten Schritt durch Zugabe von Aluminiumsulfat (entsprechend 2,4 Gew.-% $Al_2O_3$) auf einen pH-Wert von 5 eingestellt. Es werden anschließend 0,9 Gew.-% $Al_2O_3$ in Form einer parallelen Zugabe von Aluminiumsulfat- und Natriumaluminat-Lösung zugemischt, so dass der pH-Wert bei 5 gehalten wird. Die Suspension wird nach einer Rührzeit von 60 Minuten mit Hilfe einer alkalischen Natriumaluminat-Lösung auf einen pH-Wert von 6,8 eingestellt.

Die nachbehandelte $TiO_2$-Suspension wird nach einer weiteren Rührzeit von zwei Stunden filtriert und durch Waschen von den wasserlöslichen Salzen befreit. Die gewaschene Filterpaste wird nach Zugabe von etwa 0,18% $NO_3$ als $NaNO_3$ in einem Sprühtrockner getrocknet und anschließend dampfgemahlen.

Das gemäß der Erfindung hergestellte Pigment enthält folgende Nachbehandlungselemente ausgedrückt in Form ihrer Oxide: 2,5 Gew.-% $P_2O_5$ und 5,5 Gew.-% $Al_2O_3$ jeweils bezogen auf den $TiO_2$-Grundkörper und 0,18 Gew.-% $NO_3$.

Vergleichsbeispiel 1:

Eine sandgemahlene $TiO_2$-Suspension aus dem Chloridprozess mit einer $TiO_2$-Konzentration von 450 g/l wird bei 60 °C mit NaOH auf einen pH-Wert von 10 eingestellt. Unter Rühren werden der Suspension 2,4 Gew.-% $P_2O_5$ als Dinatriumhydrogenphosphat-Lösung zugefügt. Die Zugabezeit beträgt 60 Minuten, der pH-Wert der Suspension bleibt bei etwa 10. Nach einer Rührzeit von 30 Minuten werden der Suspension anschließend innerhalb von 30 Minuten 3,0 Gew.-% $Al_2O_3$ als saure Aluminumsulfat-Lösung zugemischt. Der pH-Wert der Suspension sinkt auf 2,5. Die saure Suspension wird nach einer Rührzeit von 30 Minuten mit Hilfe einer alkalischen Natriumaluminat-Lösung in der Menge von 3,4 Gew.-% gerechnet als $Al_2O_3$ auf einen pH-Wert von 7 eingestellt. Die nachbehandelte $TiO_2$-Suspension wird nach einer weiteren Rührzeit von zweieinhalb Stunden filtriert und durch Waschen von den wasserlöslichen Salzen befreit. Die gewaschene Filterpaste wird nach Zugabe von etwa 0,23 Gew.-% $NO_3$ als $NaNO_3$ in einem Sprühtrockner getrocknet und anschließend dampfgemahlen.

Das so hergestellte Vergleichspigment enthält folgende Nachbehandlungselemente ausgedrückt in Form ihrer Oxide: 2,4% $P_2O_5$ und 6,4% $Al_2O_3$ ,jeweils bezogen auf den $TiO_2$-Grundkörper und 0,23 Gew.-% $NO_3$.

Vergleichsbeispiel 2:

Eine sandgemahlene $TiO_2$-Suspension aus dem Chloridprozess mit einer $TiO_2$-Konzentration von 450 g/l wird bei 60 °C mit NaOH auf einen pH-Wert von 10 eingestellt. Unter Rühren wird die Suspension anschließend mit Phosphorsäure auf pH=5 eingestellt. Nach einer Rührzeit von 30 Minuten werden der Suspension innerhalb von 60 Minuten 2,1 Gew.-% $P_2O_5$ als $H_3PO_4$ (80-%-ig) zusammen mit 2,0 Gew.-% $Al_2O_3$ als Natriumaluminat-Lösung zugefügt, wobei der pH-Wert durch eine parallele Zugabe der beiden Komponenten bzw. nach dem Aufbrauchen der Phosphorsäure mit $H_2SO_4$ bei pH 5 gehalten wird. Die Suspension wird nach einer Rührzeit von 30 Minuten mit Hilfe einer alkalischen Natriumaluminat-Lösung auf einen pH-Wert von 7 eingestellt. Im Anschluss erfolgt die Zugabe von 2,3% $Al_2O_3$ in Form einer parallelen Zugabe von Natriumaluminat und Aluminiumsulfat bei einem pH-Wert von etwa 7. Die nachbehandelte $TiO_2$-Suspension wird nach einer weiteren Rührzeit von zweieinhalb Stunden filtriert und durch Waschen von den wasserlöslichen Salzen befreit. Die gewaschene Filterpaste wird nach Zugabe von etwa 0,18 Gew.-% $NO_3$ als $NaNO_3$ in einem Sprühtrockner getrocknet und anschließend dampfgemahlen.

Das so hergestellte Vergleichspigment enthält folgende Nachbehandlungselemente ausgedrückt in Form ihrer Oxide: 2,5% $P_2O_5$ und 4,5% $Al_2O_3$ ,jeweils bezogen auf den $TiO_2$-Grundkörper und 0,18 Gew.-%% $NO_3$.

Testmethoden und Testergebnisse

Testmethoden

Die auf diese Weise hergestellten Titandioxid-Pigmente wurden in Dekorpapier eingearbeitet und anschließend hinsichtlich ihrer optischen Eigenschaften und Lichtechtheit in verpressten Laminaten untersucht. Dazu wurde das zu prüfende Titandioxid-Pigment in Zellstoff eingearbeitet und Blätter mit einem Blattgewicht von etwa 80 g/m$^2$ und einem $TiO_2$-Massenanteil von etwa 40 % hergestellt.

a) Laminatherstellung (Labormaßstab)

Für die Beurteilung der optischen Eigenschaften der Dekorpapiere und damit der Qualität des Titandioxidpigments ist es von Bedeutung, dass Dekorpapiere gleichen Aschegehalts verglichen werden. Hierfür ist es notwendig, dass die für die Blattbildung eingesetzte Menge Titandioxidpigment entsprechend der Retention an den gewünschten $TiO_2$-Massenanteil im Papier, hier 40 % $\pm$ 1, bzw. das gewünschte Flächengewicht, hier 80 g/m$^2$ $\pm$ 1, angepasst wird. Für die Bildung eines Blattes wurden in diesen Versuchen 1,56 g Zellstoff (ofentrocken) zugrunde gelegt. Die Vorgehensweise und die eingesetzten Hilfsstoffe sind dem Fachmann bekannt.

Der Titandioxid-Gehalt (Asche in [%]) eines Blattes sowie die Retention des Pigments wurden anschließend bestimmt. Zur Bestimmung des Titandioxid-Gehalts wurde eine definierte Gewichtsmenge des hergestellten Papiers mit einem Schnellverascher bei 900 °C verascht. Über die Auswaage des Rückstands ist der Massenanteil an $TiO_2$ (Asche in [%]) zu berechnen. Zur Berechnung des Aschegehalts wurde folgende Formel zugrunde gelegt:

$$\text{Aschegehalt [g/m}^2\text{]} = (\text{Asche [\%] x Flächengewicht [g/m}^2\text{]}) / 100 \text{ [\%]}.$$

Unter Retention versteht man das Rückhaltevermögen aller anorganischen Stoffe im Papierblatt auf dem Sieb der Papiermaschine. Die sogenannte One-Pass-Retention, die hier bestimmt wird, gibt den prozentualen Anteil an, der beim einmaligen Beschickungsvorgang der Papiermaschine zurückgehalten wird. Der prozentuale Anteil der Asche bezogen auf den Massenanteil des eingesetzten Pigments am Gesamtfeststoff der Suspension ergibt die Retention:

$$\text{Retention [\%]} = \frac{\text{Asche [\%] x (Einwaage Pigment [g] + Einwaage Zellstoff [g])}}{\text{Einwaage Pigment [g]}}$$

Die weitere Verarbeitung des Papiers umfasste die Imprägnierung und Verpressung zu Laminaten. Das zu beharzende Blatt wurde in eine Melaminharzlösung vollständig eingetaucht, danach zwischen 2 Rakel gezogen, um einen bestimmten Harzauftrag zu gewährleisten, und anschließend im Umlufttrockenschrank bei 130 °C vorkondensiert. Entsprechend erfolgte eine zweite Imprägnierung. Der Harzauftrag betrug 120 bis 140 % des Blattgewichts. Das Blatt hatte eine Restfeuchte von 5 bis 6 Gew.-%. Die kondensierten Blätter wurden mit Phenolharz getränkten Kernpapieren und schwarzem Underlay-Papier zu Presspaketen zusammengelegt.

Für die Beurteilung der Versuchspigmente bestand der Laminataufbau aus 9 Schichten: Dekorpapier, Dekorpapier, Kernpapier, Kernpapier, Gegenzug aus schwarzem Underlay, Kernpapier, Kernpapier, schwarzes Underlay, Dekorpapier.

Das Pressen der Pakete erfolgt mit Hilfe einer Wickert Laminat-Presse Typ 2742 bei einer Temperatur von 140 °C und einem Druck von 90 bar für eine Presszeit von 300 Sekunden.

b) Testung

Die Messung der optischen Eigenschaften der Laminate erfolgte mit einem handelsüblichen Spektralphotometer.

Zur Beurteilung der optischen Eigenschaften von Schichtpress-Stoffen werden die Farbwerte (CIELAB L\*, -a\*, -b\*) nach DIN 6174 mit Hilfe des ELREPHO® 3000-Farbmessgeräts über zwei Dekorpapieren und über schwarzem Underlay bestimmt. Die Opazität ist ein Maß für die Lichtdurchlässigkeit oder Transmission des Papiers. Als Maß für die Opazität der Laminate wurden folgende Größen gewählt: CIELAB $L^*_{schwarz}$, die Helligkeit der Laminate gemessen über schwarzem Underlay-Papier, und der Opazitätswert L [%] =

$Y_{schwarz}/Y_{weiß}$ x 100, ermittelt aus dem Y-Wert gemessen über schwarzem Underlay-Papier ($Y_{schwarz}$) und dem Y-Wert über zwei Dekorpapieren ($Y_{weiß}$).

Testergebnisse

Tabelle 1 zeigt die Testergebnisse für Laminate, die mit dem erfindungsgemäßen Pigment (Beispiel 1) und mit zwei Vergleichspigmenten (Vergleichsbeispiel 1 und 2) hergestellt wurden. Es zeigt sich, dass das erfindungsgemäße Pigment bei gleichem Pigmenteintrag gegenüber den Vergleichspigmenten eine deutlich höhere Retention aufweist.

Tabelle 2 zeigt ebenfalls Testergebnisse der Laminate, die mit dem erfindungsgemäßen Pigment (Beispiel 1) und mit zwei Vergleichspigmenten (Vergleichsbeispiel 1 und 2) hergestellt wurden, allerdings mit deutlich reduziertem Pigmenteintrag vom erfindungsgemäßen Pigment (Beispiel 1). Hier zeigt sich, dass selbst bei verringerter Pigmenteinwaage von 1,8 g bei Beispiel 1 gegenüber 2,2 bzw. 2,1 g (Vergleichsbeispiel 1 und 2) nahezu gleiche Aschegehalte und dennoch eine verbesserte Opazität erreicht werden. Die guten übrigen optischen Eigenschaften bleiben erhalten. Die Lichtechtheit der Laminate mit dem erfindungsgemäßen Pigment und mit den Vergleichspigmenten war vergleichbar gut.

Tabelle 1:

| Pigment | Pigmenteinwaage [g] | Asche [%] | Aschegehalt [g/m$^2$] | Flächengewicht [g/m$^2$] | Retention [%] |
|---|---|---|---|---|---|
| Beispiel 1 | 2,1 | 41,7 | 34,8 | 83,3 | 73 |
| Vergleichsbeispiel 1 | 2,2 | 40,6 | 32,9 | 81,1 | 69 |
| Vergleichsbeispiel 2 | 2,1 | 40,1 | 32,3 | 80,4 | 70 |

Tabelle 2:

| Pigment | Pigmenteinwaage [g] | Aschegehalt [g/m$^2$] | Optik (Laminat) | | | Opazität (Laminat) | |
|---|---|---|---|---|---|---|---|
| | | | CIELAB L*$_{weiß}$ | CIELAB a*$_{weiß}$ | CIELAB b*$_{weiß}$ | CIELAB L*$_{schwarz}$ | Opazitätswert L [%] |
| Beispiel 1 | 1,8 | 32,3 | 93,4 | -1,3 | 2,2 | 90,1 | 91,2 |
| Vergleichsbeispiel 1 | 2,2 | 32,9 | 93,3 | -1,3 | 2,1 | 89,9 | 91,0 |
| Vergleichsbeispiel 2 | 2,1 | 32,3 | 93,2 | -1,3 | 2,2 | 89,8 | 90,9 |

**Patentansprüche**

1. Verfahren zur Herstellung eines nachbehandelten Titandioxid-Pigments **dadurch gekennzeichnet, dass**

   a) im ersten Schritt eine Aluminium-Komponente und eine Phosphor-Komponente in die $TiO_2$-Suspension gegeben werden, wobei der pH-Wert der Suspension auf mindestens 10,5 gehalten wird und
   b) im zweiten Schritt durch Zugabe einer sauren Komponente der pH-Wert der Suspension auf unter 9 gesenkt wird.

2. Verfahren nach Anspruch 1 **dadurch gekennzeichnet, dass**
   in Schritt a) als Aluminium-Komponente wasserlösliche Aluminiumverbindungen, bevorzugt Natriumaluminat und als Phosphor-Komponente anorganische Phosphatverbindungen oder Phosphorsäure, bevorzugt Dinatrium-Hydrogenphosphat
   eingesetzt werden.

3. Verfahren nach Anspruch 1 **dadurch gekennzeichnet, dass**
   in Schritt b) als saure Komponente eine Säure oder ein sauer reagierendes Salz, bevorzugt Aluminiumsulfat eingesetzt werden.

4. Verfahren nach Anspruch 1 **dadurch gekennzeichnet, dass**
   in Schritt a) ein pH-Wert von mindestens 11 gehalten wird.

5. Verfahren nach Anspruch 1 **dadurch gekennzeichnet, dass**
   in Schritt b) der pH-Wert in den Bereich 3,5 bis 8 und bevorzugt auf 4,5 - 6,0 gesenkt wird.

6. Verfahren nach einem oder mehreren der Ansprüche 1 bis 5 **dadurch gekennzeichnet, dass**
   nach Schritt b) in einem Schritt c) eine weitere Aluminiumoxidhydrat Schicht aufgebracht wird, indem der pH-Wert der Suspension im Bereich von 4 bis 9 eingestellt wird und dieser pH-Wert konstant gehalten wird durch parallele Zugabe einer alkalischen Aluminiumverbindung und einer sauren Verbindung, bevorzugt Natriumaluminat / Aluminiumsulfat oder Natriumaluminat / Schwefelsäure.

7. Verfahren nach einem oder mehreren der Ansprüche 1 bis 6 **dadurch gekennzeichnet, dass**
   am Ende der Nachbehandlung in einem Schritt d) der End-pH-Wert der Suspension auf etwa 6 bis 7 mit Hilfe von Lauge / Säure wie NaOH / $H_2SO_4$ oder mit einer alkalischen / sauren Salzlösung wie Natriumaluminat / Aluminiumsulfat eingestellt wird.

8. Verfahren nach einem oder mehreren der Ansprüche 1 bis 7 **dadurch gekennzeichnet, dass**
   die Summe der in Schritt a) bis Schritt d) zugegebenen Aluminiumverbindungen gerechnet als $Al_2O_3$ 2,0 bis 9,0 Gew.-% vorzugsweise 4,0 bis 6,0 Gew.-% bezogen auf $TiO_2$-Grundkörper beträgt.

9. Verfahren nach einem oder mehreren der Ansprüche 1 bis 5 **dadurch gekennzeichnet, dass**
   die Summe der in Schritt a) und Schritt b) zugegebenen Phosphorverbindungen gerechnet als $P_2O_5$ 1,0 bis 5,0 Gew.-% vorzugsweise 1,5 bis 3,5 Gew.-%, insbesondere 2,0 bis 3,0 Gew.-% bezogen auf $TiO_2$-Grundkörper beträgt.

10. Verfahren nach Anspruch 1 oder 2 **dadurch gekennzeichnet, dass** in Schritt a) gemeinsam mit der Al- und der P-Komponente weitere Metallsalzlösungen von z. B. Ce, Ti, Si, Zr oder Zn in die Suspension gegeben werden.

11. Verfahren nach einem oder mehreren der Ansprüche 1 bis 10 **dadurch gekennzeichnet, dass**
    entweder vor oder nach Schritt c) eine weitere anorganische Schicht aufgebracht wird.

12. Verfahren nach einem oder mehreren der Ansprüche 1 bis 11 **dadurch gekennzeichnet, dass**
    das Pigment zur Verbesserung der Lichtechtheit im Laminat mit Nitrat behandelt wird, so dass das fertige Pigment bis zu 1,0 Gew.-% $NO_3$ enthält.

13. Verfahren nach einem oder mehreren der Ansprüche 1 bis 12 **dadurch gekennzeichnet, dass**
    während der abschließenden Mahlung eine organische Substanz aufgebracht wird.

**Claims**

1.  Method for manufacturing a post-treated titanium dioxide pigment, **characterised in that**

    a) an aluminium component and a phosphorus component are added to the $TiO_2$ suspension in the first step, where the pH value of the suspension is maintained at a minimum of 10.5, and
    b) the pH value of the suspension is lowered to below 9 in the second step by adding an acid component.

2.  Method according to Claim 1, **characterised in that**, in Step a), water-soluble aluminium compounds, preferably sodium aluminate, are used as the aluminium component, and inorganic phosphate compounds or phosphoric acid, preferably disodium hydrogenphosphate, are used as the phosphorus component.

3.  Method according to Claim 1, **characterised in that**, in Step b), an acid or an acid-reacting salt, preferably aluminium sulphate, is used as the acid component.

4.  Method according to Claim 1, **characterised in that** a minimum pH value of 11 is maintained in Step a).

5.  Method according to Claim 1, **characterised in that** the pH value is lowered to the range 3.5 to 8, preferably to between 4.5 and 6.0, in Step b).

6.  Method according to one or more of Claims 1 to 5, **characterised in that**, following Step b), a further hydrous aluminium oxide layer is applied in a Step c), **in that** the pH value of the suspension is set in the range from 4 to 9 and this pH value is kept constant by parallel addition of an alkaline aluminium compound and an acid compound, preferably sodium aluminate / aluminium sulphate or sodium aluminate / sulphuric acid.

7.  Method according to one or more of Claims 1 to 6, **characterised in that**, in a Step d) at the end of post-treatment, the final pH value of the suspension is set to roughly 6 to 7 with the help of a base / acid, such as NaOH / $H_2SO_4$, or with an alkaline / acid salt solution, such as sodium aluminate / aluminium sulphate.

8.  Method according to one or more of Claims 1 to 7, **characterised in that** the sum of the aluminium compounds added in Step a) to Step d), calculated as $Al_2O_3$, is 2.0 to 9.0% by weight, preferably 4.0 to 6.0% by weight, referred to $TiO_2$ base material.

9.  Method according to one or more of Claims 1 to 5, **characterised in that** the sum of the phosphorus compounds added in Step a) and Step b), calculated as $P_2O_5$, is 1.0 to 5.0% by weight, preferably 1.5 to 3.5% by weight, particularly 2.0 to 3.0% by weight, referred to $TiO_2$ base material.

10.  Method according to Claim 1 or 2, **characterised in that** further metal salt solutions, e.g. of Ce, Ti, Si, Zr or Zn, are added to the suspension in Step a), together with the Al component and the P component.

11.  Method according to one or more of Claims 1 to 10, **characterised in that** a further inorganic layer is applied, either before or after Step c).

12.  Method according to one or more of Claims 1 to 11, **characterised in that**, to improve light-fastness in the laminate, the pigment is treated with nitrate in such a way that the finished pigment contains up to 1.0% by weight $NO_3$.

13.  Method according to one or more of Claims 1 to 12, **characterised in that** an inorganic substance is applied during final milling.

**Revendications**

1.  Procédé de fabrication d'un pigment de dioxyde de titane post-traité **caractérisé en ce que**

    a) dans la première étape, un composant d'aluminium et un composant de phosphore sont mis dans la suspension de $TiO_2$, la valeur du pH de la suspension étant maintenue à au moins 10,5 et
    b) dans la deuxième étape, la valeur du pH de la suspension est diminuée en dessous de 9 par un ajout d'un composant acide.

2.  Procédé selon la revendication 1, **caractérisé en ce que**
    dans l'étape a), des composés d'aluminium solubles dans l'eau, de préférence de l'aluminate de sodium, sont employés en tant que composants d'aluminium et des composés de phosphates non organiques ou de l'acide phosphorique, de préférence de l'hydrogénophosphate disodique, sont employés en tant que composants de phosphore.

3.  Procédé selon la revendication 1, **caractérisé en ce que**
    dans l'étape b), un acide ou un sel réagissant de manière acide, de préférence du sulfate d'aluminium, sont employés en tant que composants acides.

4.  Procédé selon la revendication 1, **caractérisé en ce que**
    dans l'étape a), on maintient une valeur de pH d'au moins 11.

5.  Procédé selon la revendication 1, **caractérisé en ce que**
    dans l'étape b), la valeur du pH est rabaissée dans la gamme de 3,5 à 8 et de préférence de 4,5 à 6,0.

6.  Procédé selon l'une ou plusieurs des revendications 1 à 5, **caractérisé en ce qu'**après l'étape b), dans une étape c), une couche supplémentaire d'oxyhydrate d'aluminium est rapportée, **en ce que** la valeur du pH de la suspension est réglée dans la gamme de 4 à 9 et cette valeur de pH est maintenue constante par l'ajout en parallèle d'un composé d'aluminium alcalin et d'un composé acide, de préférence un mélange aluminate de sodium / sulfate d'aluminium ou aluminate de sodium / acide sulfurique.

7.  Procédé selon l'une ou plusieurs des revendications 1 à 6, **caractérisé en ce qu'**à la fin du post-traitement, dans une étape d), la valeur finale du pH de la suspension est réglée à environ 6 à 7 à l'aide d'un mélange lessive / acide, tel que NaOH / $H_2SO_4$, ou avec une solution saline alcaline / acide telle qu'une solution aluminate de sodium / sulfate d'aluminium.

8.  Procédé selon l'une ou plusieurs des revendications 1 à 7, **caractérisé en ce que** la somme des composés d'aluminium ajoutés dans les étapes a) à d) calculée en équivalent $Al_2O_3$ est de 2,0 à 9,0% en poids, de préférence de 4,0 à 6,0% en poids, par rapport au corps de base en $TiO_2$.

9.  Procédé selon l'une ou plusieurs des revendications 1 à 5, **caractérisé en ce que** la somme des composés de phosphore ajoutés dans les étapes a) et b) calculée en équivalents $P_2O_5$ est de 1,0 à 5,0% en poids, de préférence de 1,5 à 3,5% en poids, notamment de 2,0 à 3,0% en poids par rapport au corps de base en $TiO_2$.

10. Procédé selon les revendications 1 ou 2, **caractérisé en ce que** dans l'étape a), conjointement avec les composants d'Al et de P, d'autres solutions salines métalliques, par exemple, de Ce, Ti, Si, Zr ou Zn sont ajoutées dans la suspension.

11. Procédé selon l'une ou plusieurs des revendications 1 à 10, **caractérisé en ce que** soit avant, soit après l'étape c), une couche non organique supplémentaire est rapportée.

12. Procédé selon l'une ou plusieurs des revendications 1 à 11, **caractérisé en ce que** le pigment est traité avec du nitrate pour l'amélioration de la résistance à la lumière dans le stratifié de sorte que le pigment terminé contient jusqu'à 1,0% en poids de $NO_3$.

13. Procédé selon l'une ou plusieurs des revendications 1 à 12, **caractérisé en ce que** pendant la mouture finale, une substance organique est rapportée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3926660 A
- US 5114486 A
- US 5785748 A
- US 4239548 A
- GB 724751 A
- EP 0406194 A1
- WO 2004018568 A1
- EP 0713904 B1
- US 5665466 A
- US 5705033 A